# EUROPÄISCHE PATENTSCHRIFT

(11) **EP 3 996 943 B1**
(45) Veröffentlichungstag und Bekanntmachung des Hinweises auf die Patenterteilung: **14.05.2025**
(21) Anmeldenummer: 20746549.3
(22) Anmeldetag: 07.07.2020
(51) Int. Cl.: B60K 1/00, B60K 11/02, B60K 17/04, F16H 57/04

(54) **ELEKTRISCHE ANTRIEBSEINHEIT FÜR EIN KRAFTFAHRZEUG**
ELECTRIC DRIVE UNIT FOR A MOTOR VEHICLE
UNITÉ D'ENTRAÎNEMENT ÉLECTRIQUE CONÇUE POUR UN VÉHICULE AUTOMOBILE

(30) Priorität: 12.07.2019 DE 102019118958
(43) Veröffentlichungstag der Anmeldung: 18.05.2022
(73) Patentinhaber: BPW Bergische Achsen KG, 51674 Wiehl (DE)
(72) Erfinder: ALT, Marie Kristin, 51674 Wiehl (DE); SCHMIDT, David, 51588 Nümbrecht (DE); LÖHE, Frank, 53809 Ruppichteroth (DE); BRUNNER, Dominik, 8572 Berg (CH); STEINER, Urs, 9552 Bronschhofen (CH)
(74) Vertreter: DREISS Patentanwälte PartG mbB
(86) Internationale Anmeldenummer: PCT/DE2020/100594
(87) Internationale Veröffentlichungsnummer: WO 2021/008653

(56) Entgegenhaltungen:
- WO-A1-2007/013642
- DE-A1- 102012 112 379
- US-A- 5 443 130
- US-A1- 2011 192 245
- US-B2- 7 059 443

## Beschreibung

Die Erfindung betrifft eine elektrische Antriebseinheit für ein Kraftfahrzeug, mit einem Elektroantrieb, einem dem Elektroantrieb nachgeschalteten mehrstufigen Getriebe, welches allein oder zusammen mit dem Elektroantrieb in einem Antriebsgehäuse angeordnet ist, das sich zusammensetzt aus einem Gehäusemantel, der mit seiner Innenseite das Getriebe ringförmig umgibt, und einer einstückig mit dem Gehäusemantel ausgebildeten Stirnwand, die zentral mit einer Getriebeöffnung für die Getriebeausgangswelle des Getriebes versehen ist, wobei zur Kühlung der Bauteile des Getriebes Kühlflüssigkeit durch das Antriebsgehäuse geleitet wird, wobei eine außen an der Stirnwand um die Getriebeöffnung herum angeordnete Ringkammer ausgebildet ist, wobei in dem Antriebsgehäuse Kühlmittelkanäle ausgebildet sind, die ausgehend von der Innenseite des Gehäusemantels in die Ringkammer führen.

Eine solche elektrische Antriebseinheit dient als Fahrantrieb eines Fahrzeugs. Zum Einsatz kommt sie als Bestandteil einer elektrischen Antriebsachse für ein Nutzfahrzeug. Bei dieser Bauart einer Fahrzeugachse ist dem gewichtsgünstig nahe der Fahrzeugmitte angeordneten Elektroantrieb ein mehrstufiges Getriebe nachgeschaltet. Das Getriebe ist allein oder zusammen mit dem Elektroantrieb in einem Antriebsgehäuse angeordnet, welches sich aus einem im Wesentlichen zylindrischen Gehäusemantel und einer mit dem Gehäusemantel einstückig ausgebildeten Stirnwand zusammensetzt. Der Gehäusemantel des Antriebsgehäuses umgibt mit seiner Innenseite ringförmig die darin gelagerten Getriebeelemente, und die Stirnwand des Antriebsgehäuses ist zentral mit einer Getriebeöffnung versehen, durch die die Getriebeausgangswelle aus dem Getriebe herausführt. Die Getriebeausgangswelle ist entweder zugleich die zum jeweiligen Fahrzeugrad führende Antriebswelle, oder sie ist drehfest mit einer separaten Antriebswelle verbunden. Die Getriebeausgangswelle bzw. die Antriebswelle rotiert in einem überwiegend rohrförmigen Achsgehäuse der elektrischen Antriebsachse. Das Achsgehäuse ist mit seinem dem Getriebe zugewandten Ende starr an der Stirnseite des Antriebsgehäuses befestigt und weist an seinem anderen Ende einen Achsschenkel auf, auf dem das angetriebene Fahrzeugrad drehbar gelagert ist.

Zur Kühlung der Getriebeelemente wird Kühlflüssigkeit durch das als Getriebegehäuse dienende Antriebsgehäuse geleitet, wobei dies in Form eines Kreislaufs erfolgt, bei dem die Kühlflüssigkeit möglichst alle mechanisch belasteten Bereiche des Getriebes einschließlich der vorhandenen Wälzlagerungen durchströmt, wozu die Kühlflüssigkeit innerhalb des Antriebsgehäuses umgewälzt wird.

Die Umwälzung der Kühlflüssigkeit innerhalb des Antriebsgehäuses stößt bei mechanisch hoch belasteten Getrieben an Grenzen, da die Getriebe oft von sehr kompakter Bauart sind und wenig Bauraumreserven vorhanden sind, um die für eine nochmals verbesserte Kühlleistung erforderlichen Baugruppen in dem vorhandenen Gehäuse unterzubringen.

Die US 5 443 130 offenbart ein Differentialgetriebe umfassend ein mit einem Elektromotor verbundenes Eingangselement und zwei Ausgangselemente, von denen die von dem Eingangselement empfangene Motorleistung auf ein erstes Radantriebselement und eine Zwischenwelle, die sich durch eine hohle Abtriebswelle des Motors erstreckt und mit einem zweiten Radantriebselement verbunden ist, verteilt wird.

Der Erfindung liegt die Aufgabe zugrunde, bei einer elektrischen Antriebseinheit, deren Bestandteil ein Antriebsgehäuse mit einem darin angeordneten, flüssigkeitsgekühlten Getriebe ist, die Kühlleistung unter Ausnutzung gerade der bauartbedingten Besonderheiten der elektrischen Antriebseinheit zu verbessern.

Zur Lösung dieser Aufgabe wird bei einer elektrischen Antriebseinheit der eingangs angegebenen Art ein die Getriebeausgangswelle umschließendes Achsgehäuse vorgeschlagen, welches dem Antriebsgehäuse zugewandt mit einem Flansch versehen ist, der an der Stirnwand befestigt ist und wobei ein Ringblech des Flansches gemeinsam mit der Stirnseite die Ringkammer bildet.

Erfindungsgemäß ist daher Bestandteil der Kühlmittelumwälzung eine Ringkammer, die allerdings nicht im Inneren des Antriebsgehäuses angeordnet ist, sondern außen an der Stirnwand des Antriebsgehäuses um die Getriebeöffnung herum angeordnet ist. Damit Kühlflüssigkeit in diese Ringkammer gelangt, sind in dem Antriebsgehäuse Kühlmittelkanäle ausgebildet, die ausgehend von der Innenseite des Gehäusemantels in die Ringkammer führen.

Die Anordnung der Ringkammer außen an der Stirnwand des Antriebsgehäuses ist von Vorteil, da das Antriebsgehäuse in seinem Inneren wenig Bauraumreserven bietet, und da Bestandteil der elektrischen Antriebsachse bauartbedingt ohnehin ein Achsgehäuse ist, welches an jener Stirnwand befestigt ist, an der sich erfindungsgemäß die Ringkammer befindet. Das Achsgehäuse ist dem Antriebsgehäuse zugewandt mit einem Flansch versehen. Der Flansch des Achsgehäuses ist an der Stirnwand befestigt, und ein Ringbereich des Flansches bildet gemeinsam mit der in der Stirnwand ausgebildeten Rinne die Ringkammer.

Aufgrund der bauartbedingten Besonderheit der elektrischen Antriebsachse lässt sich daher eine Ringkammer für das Umwälzen der Kühlflüssigkeit realisieren, die zum Teil durch die Stirnwand des Antriebsgehäuses begrenzt wird, und zum anderen Teil durch einen Ringbereich an dem Achsgehäuse. Die Ringkammer wird also nicht allein durch das Antriebsgehäuse gebildet, sondern durch die bauartbedingte Kombination aus Antriebsgehäuse und dem daran stirnseitig befestigten, die Getriebeausgangswelle umgebenden Achsgehäuse.

Bevorzugt ist eine Ausgestaltung, bei der die Ringkammer teilweise, nämlich seitens des Antriebsgehäuses, durch eine Rinne in der Außenseite der Stirnwand gebildet wird.

Das Achsgehäuse ist Bestandteil der elektrischen Antriebsachse und ist an seinem dem Flansch abgewandten Ende mit einem Achsschenkel zur Lagerung eines Fahrzeugrades versehen.

Gemäß einer Ausgestaltung der Antriebseinheit ist an dem Flansch ein Kühlmittel-Anschlussstutzen angeordnet, und ein Kühlmittelkanal führt von dem Kühlmittel-Anschlussstutzen in die Ringkammer, um diese z. B. mit frischem Kühlmittel zu befüllen oder im Fall einer aktiven Umlaufkühlung Kühlmittel kontinuierlich hineinzupumpen.

Ferner bevorzugt ist eine erste und eine zweite Abdichtung zwischen dem Flansch und der Stirnwand. Vorzugsweise ist die erste Abdichtung eine zwischen der Ringkammer und der zentralen Getriebeöffnung angeordnete Ringdichtung, und die zweite Abdichtung ist eine um die Ringkammer herum angeordnete Ringdichtung. Vorzugsweise sitzen die Ringdichtungen in zu der Außenseite der Stirnwand hin offenen Ringnuten, wobei die Ringnuten in der Stirnwand ausgebildet sind.

Gemäß einer weiteren Ausgestaltung sind die beiden Abdichtungen in Längsrichtung der Getriebeausgangswelle axial zueinander versetzt angeordnet, wobei die zweite Abdichtung die näher antriebsseitige Abdichtung ist.

Gemäß einer weiteren Ausgestaltung sind in dem Antriebsgehäuse weitere Kühlmittelkanäle ausgebildet, wobei die weiteren Kühlmittelkanäle von der Ringkammer durch die Stirnwand hindurch bis an deren Innenseite führen. Über diese weiteren Kühlmittelkanäle kann daher das Kühlmittel die Ringkammer verlassen und wieder zurück in das Innere des Antriebsgehäuses strömen. Vorzugsweise sind die weiteren Kühlmittelkanäle Bohrungen, die in Bezug auf die zentrale Achse auf einem Durchmesser angeordnet sind, der geringer ist als der Durchmesser, auf dem die Kühlmittelkanäle angeordnet sind.

Herstellungstechnisch von Vorteil ist es, wenn die Achsen der weiteren Kühlmittelkanäle parallel zu der zentralen Achse ausgerichtet sind.

Hinsichtlich einer günstigen Durchströmung der Ringkammer ist es von Vorteil, wenn die weiteren Kühlmittelkanäle an den Boden, und die Kühlmittelkanäle in der Seitenwand der als Rinne ausgebildeten Ringkammer münden.

Ferner wird vorgeschlagen, dass der Flansch des Achsgehäuses mittels einer Mehrzahl auf einem gemeinsamen Teilkreis angeordneter Schrauben an der Stirnwand des Antriebsgehäuses befestigt ist. Vorzugsweise ist der Durchmesser des Teilkreises größer als der größte Durchmesser der Ringkammer, und vorzugsweise größer als der Durchmesser der zweiten Abdichtung.

Vorzugsweise greifen die Schrauben mit ihrem Gewinde in Gewindesachlöcher ein, die in der Stirnwand ausgebildet sind.

Für eine kompakte Bauart des Antriebsgehäuses und der Befestigung des Achsgehäuses daran ist von Vorteil, wenn die Kühlmittelkanäle auf solchen Umfangsabschnitten in die Ringkammer führen, auf denen in der Stirnwand keine Gewindesacklöcher ausgebildet sind.

Ferner wird vorgeschlagen, dass die Stirnwand und der Flansch durch an ihnen ausgebildete und in gegenseitigem Kontakt stehende Zentrierflächen axial zueinander ausgerichtet sind.

Vorzugsweise sind die Zentrierflächen auf einem Durchmesser angeordnet, der geringer ist als der geringste Durchmesser der Ringkammer, und größer ist als der Durchmesser der ersten Abdichtung.

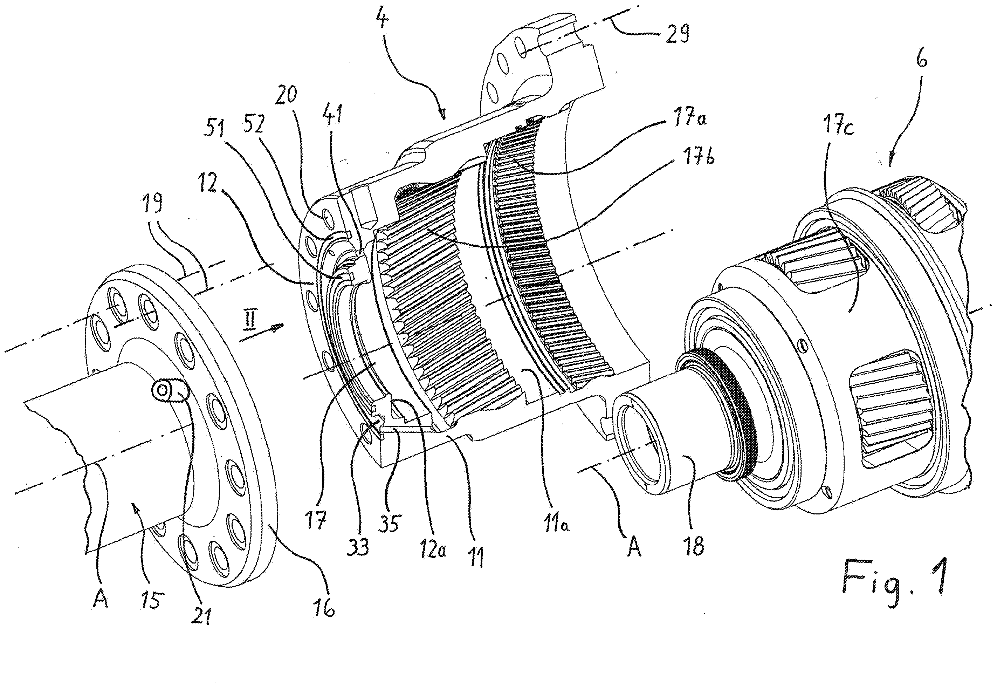

Weitere Vorteile und Einzelheiten der elektrischen Antriebsachse für ein Nutzfahrzeug ergeben sich aus der nachfolgenden Beschreibung eines auf der Zeichnung wiedergegebenen Ausführungsbeispiels. Im Einzelnen zeigen: Fig. 1: in einer perspektivischen Darstellung Einzelteile einer elektrischen Antriebsachse für ein Nutzfahrzeug, nämlich ein mehrstufiges Getriebe in der Bauart als doppeltes Planetengetriebe, ein das Getriebe aufnehmendes Antriebsgehäuse in einem Teilschnitt, sowie ein stirnseitig gegen das Antriebsgehäuse befestigbares Achsgehäuse, wobei die genannten Bestandteile aus Übersichtsgründen getrennt wiedergegeben sind;
Fig. 2: eine stirnseitige Ansicht des Antriebsgehäuses entsprechend der in Fig. 1 wiedergegebene Blickrichtung II;
Fig. 3: einen Längsschnitt durch die eine Hälfte der elektrischen Antriebsachse entlang einer in Fig. 2 mit "III - III" bezeichneten, versetzten Schnittebene;
Fig. 4: einen vergrößerten Ausschnitt der Fig. 3.

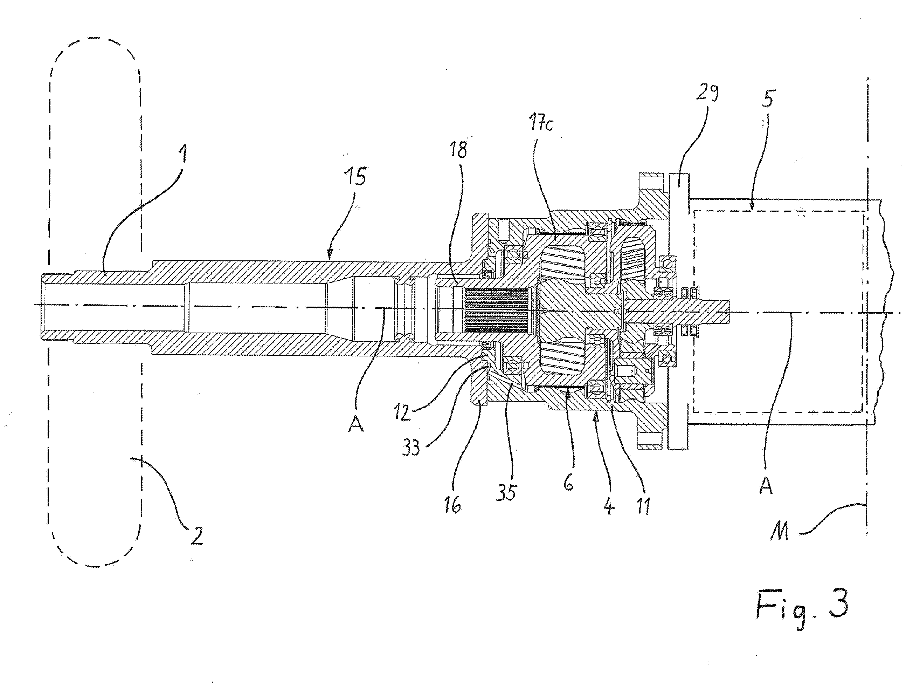

Fig. 3 zeigt in einem teilweisen Längsschnitt, der hier als Übersichtsdarstellung dient, die eine Hälfte einer elektrischen Antriebsachse für ein Kraftfahrzeug. Die dargestellte Hälfte der Antriebsachse dient dem Antrieb eines auf einem Achsschenkel 1 drehbar gelagerten, in Fig. 3 am linken Rand gestrichelt dargestellten Fahrzeugrades 2. Die ebenso gestaltete zweite Hälfte der Antriebsachse befindet sich symmetrisch auf der anderen Seite der in Fig. 3 eingetragenen Fahrzeugmittelebene M, und trägt das jeweilige Fahrzeugrad der anderen Fahrzeugseite. Die elektrische Antriebsachse ist in ihrer Gesamtheit eine von der einen bis zur anderen Fahrzeugseite durchgehende Starrachse.

Für jede Fahrzeugseite und damit zum Antrieb des jeweiligen Fahrzeugrades 2 ist nahe der Fahrzeugmittelebene M ein Elektroantrieb 5 vorgesehen, insbesondere ein Elektromotor. Jedem Elektromotor nach fahrzeugaußen nachgeschaltet ist jeweils ein Getriebe 6, hier in der Bauart eines zweistufigen Planetengetriebes.

Die zwei Elektroantriebe 5 und zwei Getriebe 6 der elektrischen Antriebseinheit befinden sich in einem Antriebsgehäuse 4, welches ein- oder mehrteilig sein kann. Bei der hier beschriebenen Ausführungsform besteht das Antriebsgehäuse 4 aus drei Teilen bzw. Abschnitten, wobei sich beide Elektroantriebe 5 in einem gemeinsamen Antriebsgehäuseteil befinden, und jedes der beiden Getriebe 6 in einem weiteren, eigenen Antriebsgehäuseteil. Alternativ kann für jede Fahrzeugseite der Elektroantrieb 5 gemeinsam mit seinem Getriebe 6 in einem gemeinsamen Antriebsgehäuse 4 angeordnet sein.

Das Antriebsgehäuse 4 ist also zugleich das Getriebegehäuse der Antriebseinheit und setzt sich zusammen aus einem im Wesentlichen zylindrischen Gehäusemantel 11, der mit seiner Innenseite 11a die Getriebeelemente des Getriebes 6 ringförmig umgibt, und aus einer einstückig mit dem Gehäusemantel 11 ausgebildeten Stirnwand 12. Die Stirnwand 12 ist überwiegend geschlossen, lässt jedoch in ihrem Zentrum eine Getriebeöffnung 17 frei, durch die die auf der zentralen Drehachse A rotierende Getriebeausgangswelle 18 des Getriebes 6 hindurchführt.

Die Getriebeausgangswelle 18 kann, vorzugsweise über eine Keilverzahnung, drehfest mit einer Antriebswelle verbunden sein, welche zu dem Fahrzeugrad 2 führt und dieses antreibt. Anders als die Getriebeausgangswelle 18 ist die Antriebswelle nicht auf der Zeichnung dargestellt. Die Antriebswelle rotiert in einem rohrförmigen Achsgehäuse 15 der Antriebseinheit, welches sich auf der zentralen Achse A erstreckt. Das Achsgehäuse 15 ist an der Stirnseite des Antriebsgehäuses 4 befestigt.

Das Achsgehäuse 15 der Antriebseinheit ist an seinem fahrzeugäußeren Ende mit dem Achsschenkel 1 versehen. Außerdem ist an dem Achsgehäuse 15 der Bremsträger der Fahrzeugbremse befestigt, vorzugsweise der Bremsträger einer Scheibenbremse. Ebenfalls an dem Achsgehäuse 15 befestigt ist ein Längslenker und ggf. ein Querlenker der Fahrzeugachse.

Zur Befestigung des Achsgehäuses 15 an dem Antriebsgehäuse 4 ist das Achsgehäuse 15 an seinem fahrzeuginneren Ende mit einem radial erweiterten Flansch 16 versehen. Der Flansch 16 ist mittels mehrerer Schrauben 19 starr gegen die Stirnwand 12 des Antriebsgehäuses 4 verschraubt. Die Schrauben 19 stützen sich mit ihren Schraubenköpfen an dem Flansch 16 ab und greifen mit ihrem Gewinde in Gewindesacklöcher 20 ein, die in der Stirnwand 12 ausgebildet sind.

Auch die Verbindung der Antriebsgehäuseteile, also des den Elektroantrieb 5 aufnehmenden Antriebsgehäuseteils einerseits und des das Getriebe 6 aufnehmenden Antriebsgehäuseteils andererseits, erfolgt mittels Verschraubungen 29, wozu die jeweiligen Enden dieser Antriebsgehäuseteile als Flansche gestaltet sind, die über die Verschraubungen 29 fest und vorzugsweise flüssigkeitsdicht miteinander verbunden sind. Sofern im Folgenden allgemein von dem Antriebsgehäuse 4 die Rede ist, ist damit jeweils jenes Antriebsgehäuseteil gemeint, in dem sich das Getriebe 6 und vorzugsweise zweistufige Planetengetriebe befindet.

Das Antriebsgehäuse hat nicht nur die Gehäusefunktion, sondern es ist auch selbst Teil des Planetengetriebes, indem gemäß Fig. 1 die Innenseite 11a des Gehäusemantels 11 eine um die Drehachse A herum angeordnete Schrägverzahnung 17a der ersten Getriebestufe, und axial versetzt eine um die Drehachse A herum angeordnete Schrägverzahnung 17b der zweiten Getriebestufe aufweist. Die Ausrichtung bzw. Schrägstellung der Zähne der Schrägverzahnung 17b ist entgegengesetzt zu den Zähnen der ersten Schrägverzahnung 17a.

Mit den innen an dem Gehäusemantel 11 ausgebildeten Schrägverzahnungen 17a, 17b kämmen die Planetenräder der beiden Getriebestufen des Planetengetriebes. Dessen übrige Getriebeelemente sind in einem auf der Achse A drehbaren Getriebeträger 17c angeordnet, der nach Art einer vormontierten Baueinheit in das Antriebsgehäuse 4 eingesetzt ist.

Das Getriebe 6 ist von der Bauart eines Planetengetriebes. Die Planetenräder und Hohlräder des Planetengetriebes weisen eine Zahnschrägstellung auf, die eine von der Stirnwand 12 weg weisende Schaufelwirkung auf das Kühlmittel erzeugen, und die im Fall einer passiven Sumpfkühlung eine zu der Stirnwand 12 hin gerichtete Schaufelwirkung auf das Kühlmittel erzeugen.

Der zentrale Teil des Getriebeträgers 17c ist die auf der Achse A drehende Getriebeausgangswelle 18, welche aus der ebenfalls zentral angeordneten Getriebeöffnung 17 des Antriebsgehäuses 4 herausragt und sich in das Achsgehäuse 15 hinein erstreckt.

Die Kühlung des Getriebes 6 und dessen teils stark belasteter Zähne, Ritzel und Lager erfolgt im Fall einer aktiven Umlaufkühlung mittels der durch eine externe Pumpe umgewälzten Kühlflüssigkeit. Die Pumpe zieht die Flüssigkeit aus dem Antriebsgehäuse 4 ab, führt sie durch einen externen Wärmetauscher und fördert sie dann zu einem Anschlussstutzen 21, über den die Kühlflüssigkeit auf kurzem Wege in die Ringkammer 33 und damit zurück in den Kreislauf gelangt. Der Anschlussstutzen 21 befindet sich an dem Flansch 16 des Achsgehäuses 15.

Im Falle der passiven Sumpfschmierung hingegen wird die Flüssigkeit ausschließlich innerhalb des Antriebsgehäuses 4 einschließlich der Ringkammer 33 umgewälzt, unter Verzicht auf eine externe Pumpe.

Unabhängig von der Art der Umwälzung ist die Kühlflüssigkeit vorzugsweise ein Getriebeöl, so dass die Flüssigkeit sowohl die Getriebeelemente schmiert, als auch den Wärmeabtransport übernimmt.

Bedingt durch die Bauart als Planetengetriebe wird Kühl- und Schmierflüssigkeit infolge von Zentrifugalkräften von den Planetenrädern nach außen gegen die Schrägverzahnungen 17a, 17b geschleudert. Die Kühlflüssigkeit sammelt sich daher an der Innenseite 11a des Gehäusemantels 11. Die im Folgenden näher beschriebenen Maßnahmen dienen dazu, die sich so an der Innenseite 11a des Gehäusemantels 11 ansammelnde Flüssigkeit zurück in zentralere Bereiche des Getriebes 6 sowie in den Bereich von Wälzlagern zu transportieren, zum Beispiel zu den Wälzlager 31 der Getriebeausgangswelle 18.

Zur Verbesserung des Kühlmitteltransports und der Kühlleistung ist außen an der Stirnwand 12 eine die zentrale Drehachse A und die Getriebeöffnung 17 in Gestalt eines vollständigen Rings umgebende Ringkammer 33 angeordnet, in der sich Kühlmittel zwecks weiterer Umwälzung sammeln kann. Zugleich sind in dem Übergangsbereich zwischen dem Gehäusemantel 11 und der Stirnwand 12 des Antriebsgehäuses mehrere Kühlmittelkanäle 35 ausgebildet, die, ausgehend von der Innenseite 11a des Gehäusemantels 11, in die Ringkammer 33 führen. Innen am Gehäusemantel 11 und insbesondere an den Schrägverzahnungen 17a, 17b angesammelte Flüssigkeit gelangt daher in einem ersten Schritt durch die Kühlmittelkanäle 35 in die Ringkammer 33, die somit einen Sammler für Kühlflüssigkeit bildet.

Eine Ringkammer beansprucht Platz, welcher in dem sehr kompakt gestalteten Antriebsgehäuse 4 nicht zur Verfügung steht. Daher befindet sich die Ringkammer 33 außen an der dem Fahrzeugrad 2 zugewandten Stirnseite des Antriebsgehäuses 4. Vor allem wird die Ringkammer 33 nicht alleine durch das Antriebsgehäuse 4 selbst gebildet, sondern zu einem anderen Teil durch das Achsgehäuse 15. Dies wird erreicht, indem die Ringkammer 33 zu einem Teil durch eine in der Außenseite der Stirnwand 12 ausgebildete, ringförmige Rinne gebildet wird, und zu einem anderen Teil durch einen Ringbereich an der Stirnseite des Flansches 16. Der Ringbereich an der Stirnseite des Flansches 16 bildet also gemeinsam mit der in der Stirnwand 12 ausgebildeten Rinne die Ringkammer 33, so dass an der Kühlmittelführung und Umwälzung nicht nur Bauteile des Getriebes beteiligt sind, sondern auch andere Bauteile der Antriebseinheit, nämlich der Flansch 16 des Achsgehäuses 15.

Das Umwälzen des Kühlmittels und die Verbesserung der Kühlleistung wird auf diese Weise unter Ausnutzung gerade der bauartbedingten Besonderheiten der elektrischen Antriebseinheit erreicht, da auch das Achsgehäuse 15 Bestandteil dieser Antriebseinheit ist.

Damit die Ringkammer 33 als Sammler dienen kann, ist eine Vielzahl der genannten Kühlmittelkanäle 35 vorhanden, wobei die Kühlmittelkanäle 35 vorzugsweise gleichmäßig über den Umfang des runden Antriebsgehäuses 4 verteilt angeordnet sind.

Die in der Ringkammer 33 gesammelte Kühlflüssigkeit gelangt über weitere Kühlmittelkanäle 41 zurück in das Innere des Antriebsgehäuses 4. Die weiteren Kühlmittelkanäle 41 sind ebenfalls in einer Vielzahl vorhanden und gleichmäßig über den Umfang des runden Antriebsgehäuses 4 verteilt angeordnet. Sie führen von der Ringkammer 33 durch die Stirnwand 12 hindurch und münden jeweils an der Innenseite 12a der Stirnwand 12.

Bei dem hier beschriebenen Ausführungsbeispiel sind die weiteren Kühlmittelkanäle 41 jeweils Durchgangsbohrungen, welche sich parallel zu der Drehachse A der Getriebeausgangswelle 18 erstrecken. In Bezug auf die Drehachse A sind die weiteren Kühlmittelkanäle 41 auf einem Durchmesser angeordnet, der geringer ist als der Durchmesser, auf dem die Kühlmittelkanäle 35 angeordnet sind.

Um das im Bereich der Innenseite 11a angesammelte Kühlmedium in die Ringkammer 33 zu transportieren, verlaufen die Kühlmittelkanäle 35 unter einer Neigung zu der zentralen Achse A der Antriebseinheit. Die Einmündung jedes Kühlmittelkanals 35 in das Innere des Antriebsgehäuses 4 befindet sich radial weiter außen, als die Einmündung jedes Kühlmittelkanals 35 in die Ringkammer 33.

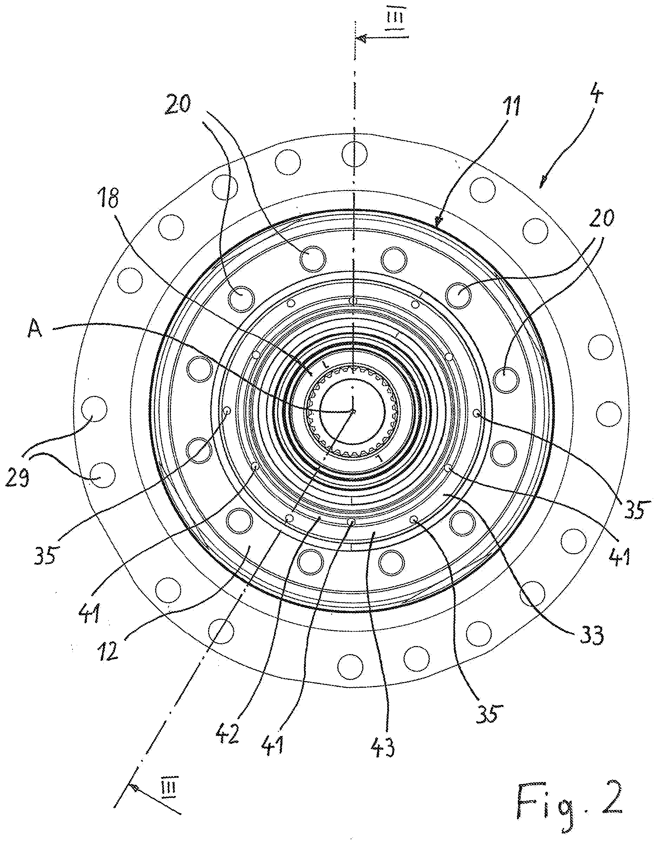

Gemäß Fig. 2 ist die Einmündung der Kühlmittelkanäle 35 einerseits und der weiteren Kühlmittelkanäle 41 andererseits in die rinnenförmige Ringkammer 33 dergestalt, dass die weiteren Kühlmittelkanäle 41 am Boden 42 der Ringkammer 33, und die Kühlmittelkanäle 35 in einer schräg zum Boden 42 angeordneten Seitenwand 43 der Ringkammer 33 münden. Bei dem Ausführungsbeispiel ist die Seitenwand 43 der Rinne, in die die Kühlmittelkanäle 35 münden, schräg zum Boden 42 der Rinne angeordnet, hingegen ist die andere Seitenwand im Wesentlichen senkrecht zum Boden 42 der Rinne angeordnet. Durch diese Ausgestaltung wird eine gleichmäßige Kühlmittelverteilung innerhalb der Ringkammer 33 erzielt.

Die Ringkammer 33 ist über eine erste Abdichtung 51 nach radial innen, und über eine zweite Abdichtung 52 nach radial außen abgedichtet, so dass weder nach innen, noch nach außen Flüssigkeit austreten kann. Vorzugsweise sind beide Abdichtungen 51, 52 um die zentrale Achse A herum angeordnete Ringdichtungen. Die Nut zur Aufnahme der jeweiligen Ringdichtung ist in der Stirnseite der Stirnwand 12 ausgebildet.

Die Stirnwand 12 und der Flansch 16 sind durch an ihnen ausgebildete und in gegenseitigem Kontakt stehende Zentrierflächen 55 axial zueinander ausgerichtet. Die Zentrierflächen in Gestalt einer in Ringform um die zentrale Achse A verlaufenden Stufe sind auf einem Durchmesser angeordnet, der geringer ist als der geringste Durchmesser der Ringkammer 33. Die ringförmigen Zentrierflächen 55 befinden sich also radial zwischen der Ringkammer 33 und der inneren, ersten Abdichtung 51.

Die den Flansch 16 an der Stirnwand 12 befestigenden, auf einem einheitlichen Teilkreis angeordneten Schrauben 19 greifen mit ihrem Gewinde jeweils in ein Gewindesackloch 20 ein, welches in der Stirnwand 12 ausgebildet ist.

Für eine insgesamt kompakte Bauweise sind die Gewindesacklöcher 20 einerseits und die Kühlmittelkanäle 35 auf unterschiedlichen Umfangsabschnitten angeordnet (Fig. 2). Zum Beispiel kann sich in Umfangsrichtung jeweils eine Schraube 19 bzw. ihr Gewindesackloch 20 mit einem der Kühlmittelkanäle 35 abwechseln. Bevorzugt ist jedoch die Ausgestaltung nach Fig. 2, bei der die Anzahl der Kühlmittelkanäle 35 halb so groß ist wie die Anzahl der Schrauben 19 bzw. Gewindesacklöcher 20.

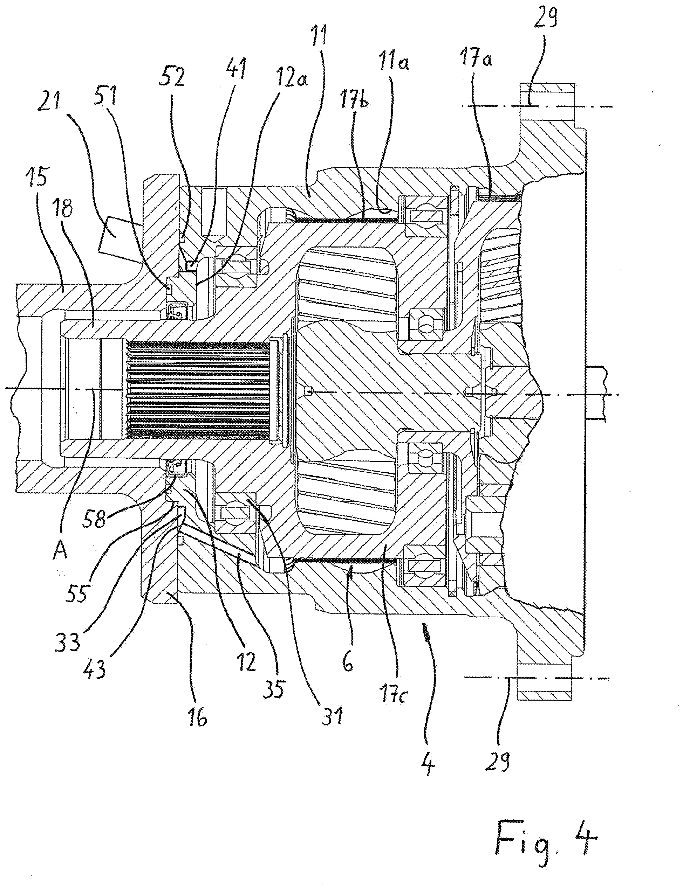

Gemäß Fig. 4 sind die weiteren Kühlmittelkanäle 41 so ausgerichtet, dass das aus ihnen austretende Kühlmittel nahezu auf direktem Wege zu jenem Wälzlager 31 gelangt, welches die Getriebeausgangswelle 18 in dem Gehäusemantel 11 lagert. Dies verbessert die Kühlung wie auch die Schmierung gerade dieses stark belasteten Wälzlagers 31.

Die radiale Abdichtung der Getriebeausgangswelle 18 gegenüber der umgebenden Getriebeöffnung 17 erfolgt mittels eines zwischen diesen Bauteilen angeordneten Radialwellendichtrings 58.

### Bezugszeichenliste

1 : Achsschenkel
2 : Fahrzeugrad
4 : Antriebsgehäuse
5 : Elektroantrieb
6 : Getriebe
11 : Gehäusemantel
11a : Innenseite Gehäusemantel
12 : Stirnwand
12a : Innenseite Stirnwand
15 : Achsgehäuse
16: Flansch
17: Getriebeöffnung
17a : Schrägverzahnung
17b : Schrägverzahnung
17c : Getriebeträger
18: Getriebeausgangswelle
19 : Schraube
20 : Gewindesackloch
21 : Anschlussstutzen
29 : Verschraubung
31 : Wälzlager
33: Ringkammer
35: Kühlmittelkanal
41 : Kühlmittelkanal
42: Boden
43 : Seitenwand
51 : erste Abdichtung, Ringdichtung
52 : zweite Abdichtung, Ringdichtung
55 : Zentrierflächen
58: Radialwellenabdichtung
A : zentrale Achse, Drehachse
M : Fahrzeugmittelebene

## Patentansprüche

1. Elektrische Antriebseinheit für ein Kraftfahrzeug, mit einem Elektroantrieb (5), einem dem Elektroantrieb (5) nachgeschalteten, mehrstufigen Getriebe (6), welches allein oder zusammen mit dem Elektroantrieb (5) in einem Antriebsgehäuse (4) angeordnet ist, das sich zusammensetzt aus einem Gehäusemantel (11), der mit seiner Innenseite (11a) das Getriebe (6) ringförmig umgibt, und einer einstückig mit dem Gehäusemantel (11) ausgebildeten Stirnwand (12), die zentral mit einer Getriebeöffnung (17) für die Getriebeausgangswelle (18) des Getriebes (6) versehen ist, wobei zur Kühlung der Bauteile des Getriebes (6) Kühlflüssigkeit durch das Antriebsgehäuse (4) geleitet wird, wobei eine Ringkammer (33) außen an der Stirnwand (12) um die Getriebeöffnung (17) herum angeordnete ist, wobei in dem Antriebsgehäuse (4) Kühlmittelkanäle (35) ausgebildet sind, die ausgehend von der Innenseite (11 a) des Gehäusemantels (11) in die Ringkammer (33) führen, **gekennzeichnet durch** ein die Getriebeausgangswelle (18) umschließendes Achsgehäuse (15), welches dem Antriebsgehäuse (4) zugewandt mit einem Flansch (16) versehen ist, der an der Stirnwand (12) befestigt ist, wobei ein Ringbereich des Flansches (16) gemeinsam mit der Rinne die Ringkammer (33) bildet.

2. Elektrische Antriebseinheit nach Anspruch 1, **dadurch gekennzeichnet, dass** die Ringkammer (33) teilweise durch eine Rinne in der Außenseite der Stirnwand (12) gebildet wird.

3. Elektrische Antriebseinheit nach Anspruch 1 oder 2, **dadurch gekennzeichnet, dass** das Achsgehäuse (15) an seinem dem Flansch (16) abgewandten Ende mit einem Achsschenkel (1) zur Lagerung eines Fahrzeugrades (2) versehen ist.

4. Elektrische Antriebseinheit nach einem der vorangehenden Ansprüche, **dadurch gekennzeichnet, dass** an dem Flansch (16) ein Kühlmittel-Anschlussstutzen angeordnet ist, und dass ein Kühlmittelkanal von dem Kühlmittel-Anschlussstutzen in die Ringkammer (33) führt.

5. Elektrische Antriebseinheit nach einem der vorangehenden Ansprüche, gekennzeichnet durcheine erste und eine zweite Abdichtung zwischen dem Flansch und der Stirnwand (12), wobei die erste Abdichtung eine zwischen der Ringkammer (33) und der Getriebeöffnung (17) angeordnete Ringdichtung (51), und die zweite Abdichtung eine um die Ringkammer (33) herum angeordnete Ringdichtung (52) ist.

6. Elektrische Antriebseinheit nach Anspruch 5, **dadurch gekennzeichnet, dass** die Ringdichtungen (51, 52) in zu der Außenseite der Stirnwand (12) hin offenen Ringnuten in der Stirnwand (12) sitzen.

7. Elektrische Antriebseinheit nach Anspruch 5 oder 6, **dadurch gekennzeichnet, dass** die beiden Abdichtungen (51, 52) in Längsrichtung der Getriebeausgangswelle (18) axial zueinander versetzt angeordnet sind, wobei die zweite Abdichtung (52) die näher antriebsseitige Abdichtung ist.

8. Elektrische Antriebseinheit nach einem der vorangehenden Ansprüche, **dadurch gekennzeichnet, dass** in dem Antriebsgehäuse (4) weitere Kühlmittelkanäle (41) ausgebildet sind, und dass die weiteren Kühlmittelkanäle (41) von der Ringkammer (33) durch die Stirnwand (12) hindurch bis an deren Innenseite (12a) führen.

9. Elektrische Antriebseinheit nach Anspruch 8, **dadurch gekennzeichnet, dass** die weiteren Kühlmittelkanäle (41) Bohrungen sind, die in Bezug auf die zentrale Achse (A) auf einem Durchmesser angeordnet sind, der geringer ist als der Durchmesser, auf dem die Kühlmittelkanäle (35) angeordnet sind.

10. Elektrische Antriebseinheit nach Anspruch 8 oder 9, **dadurch gekennzeichnet, dass** die Achsen der weiteren Kühlmittelkanäle (41) parallel zu der zentralen Achse (A) ausgerichtet sind.

11. Elektrische Antriebseinheit nach einem der Ansprüche 8 - 10, **dadurch gekennzeichnet, dass** die weiteren Kühlmittelkanäle (41) an dem Boden (42), und dass die Kühlmittelkanäle (35) in der Seitenwand (43) der als Rinne ausgebildeten Ringkammer (33) münden.

12. Elektrische Antriebseinheit nach einem der vorangehenden Ansprüche, **dadurch gekennzeichnet, dass** der Flansch (16) des Achsgehäuses (15) mittels einer Mehrzahl auf einem gemeinsamen Teilkreis angeordneter Schrauben (19) an der Stirnwand (12) befestigt ist.

13. Elektrische Antriebseinheit nach Anspruch 12, **dadurch gekennzeichnet, dass** der Durchmesser des Teilkreises größer ist als der größte Durchmesser der Ringkammer (33), und vorzugsweise größer als der Durchmesser der zweiten Abdichtung (52).

14. Elektrische Antriebseinheit nach Anspruch 12 oder 13 **dadurch gekennzeichnet, dass** die Schrauben (19) mit ihrem Gewinde in Gewindesacklöcher (20) engreifen, die in der Stirnwand (12) ausgebildet sind.

15. Elektrische Antriebseinheit nach Anspruch 14, **dadurch gekennzeichnet, dass** die Kühlmittelkanäle (35) auf solchen Umfangsabschnitten in die Ringkammer (33) führen, auf denen in der Stirnwand (12) keine Gewindesacklöcher (20) ausgebildet sind.

16. Elektrische Antriebseinheit nach einem der Ansprüche 12 - 15, **dadurch gekennzeichnet, dass** die Stirnwand (12) und der Flansch (16) durch an ihnen ausgebildete und in gegenseitigem Kontakt stehende Zentrierflächen (55) axial zueinander ausgerichtet sind.

17. Elektrische Antriebseinheit nach Anspruch 16, **dadurch gekennzeichnet, dass** die Zentrierflächen (55) auf einem Durchmesser angeordnet sind, der geringer ist als der geringste Durchmesser der Ringkammer (33).

## Claims

1. Electric drive unit for a motor vehicle, comprising an electric drive (5), a multi-stage transmission (6) connected downstream of the electric drive (5) and arranged alone or together with the electric drive (5) in a drive housing (4) which is composed of a housing casing (11) which annularly surrounds the transmission (6) with its inner face (11a), and a front wall (12) which is formed in one piece with the housing casing (11) and which is centrally provided with a transmission opening (17) for the transmission output shaft (18) of the transmission (6), cooling fluid being passed through the drive housing (4) to cool the components of the transmission (6), an annular chamber (33) is arranged on the outside of the front wall (12) around the transmission opening (17), coolant channels (35) which lead from the inner face (11a) of the housing casing (11) into the annular chamber (33) being formed in the drive housing (4), **characterized by** an axle housing (15) enclosing the transmission output shaft (18) and provided with a flange (16) which faces the drive housing (4) and is fastened to the front wall (12), **and in that** an annular region of the flange (16) together with the front face (12) forms the annular chamber (33).

2. Electric drive unit according to claim 1, **characterized in that** the annular chamber (33) is partially formed by a groove in the outside of the front wall (12).

3. Electric drive unit according to claim 1 or 2, **characterized in that** the axle housing (15) is provided at its end facing away from the flange (16) with a steering knuckle (1) for supporting a vehicle wheel (2).

4. Electric drive unit according to any of the preceding claims,
**characterized in that** a coolant connection piece is arranged on the flange (16), **and in that** a coolant channel leads from the coolant connection piece into the annular chamber (33).

5. Electric drive unit according to any of the preceding claims,
**characterized by** a first and a second seal between the flange and the front wall (12), the first seal being an annular seal (51) arranged between the annular chamber (33) and the transmission opening (17), and the second seal being an annular seal (52) arranged around the annular chamber (33).

6. Electric drive unit according to claim 5, **characterized in that** the annular seals (51, 52) are seated in ring grooves in the front wall (12) which are open toward the outside of the front wall (12).

7. Electric drive unit according to claim 5 or 6, **characterized in that** the two seals (51, 52) are arranged axially offset from one another in the longitudinal direction of the transmission output shaft (18), the second seal (52) being the seal closer to the drive side.

8. Electric drive unit according to any of the preceding claims,
**characterized in that** in the drive housing (4) further coolant channels (41) are formed, **and in that** the further coolant channels (41) lead from the annular chamber (33) through the front wall (12) to its inner face (12a).

9. Electric drive unit according to claim 8, **characterized in that** the further coolant channels (41) are bores which are arranged, with respect to the central axis (A), on a diameter which is smaller than the diameter on which the coolant channels (35) are arranged.

10. Electric drive unit according to claim 8 or 9, **characterized in that** that the axes of the further coolant channels (41) are aligned in parallel with the central axis (A).

11. Electric drive unit according to any of claims 8-10, **characterized in that** the further coolant channels (41) open onto the bottom (42), **and in that** the coolant channels (35) open into the side wall (43) of the annular chamber (33) designed as a groove.

12. Electric drive unit according to any of the preceding claims,
**characterized in that** the flange (16) of the axle housing (15) is fastened to the front wall (12) by means of a plurality of screws (19) arranged on a common pitch circle.

13. Electric drive unit according to claim 12, **characterized in that** the diameter of the pitch circle is larger than the largest diameter of the annular chamber (33), and preferably larger than the diameter of the second seal (52).

14. Electric drive unit according to claim 12 or 13, **characterized in that** the screws (19) engage with their thread in threaded blind holes (20) formed in the front wall (12).

15. Electric drive unit according to claim 14, **characterized in that** the coolant channels (35) lead into the annular chamber (33) on the circumferential portions on which no threaded blind holes (20) are formed in the front wall (12).

16. Electric drive unit according to any of claims 12-15, **characterized in that** the front wall (12) and the flange (16) are axially aligned with each other by centering surfaces (55) formed on them and in mutual contact.

17. Electric drive unit according to claim 16, **characterized in that** the centering surfaces (55) are arranged on a diameter which is smaller than the smallest diameter of the annular chamber (33).

## Revendications

1. Unité d'entraînement électrique pour un véhicule automobile, comportant un entraînement électrique (5), une transmission (6) à plusieurs étages, montée en aval de l'entraînement électrique (5), laquelle est disposée seule ou avec l'entraînement électrique (5) dans un boîtier d'entraînement (4) qui se compose d'une enveloppe de boîtier (11) qui entoure à la manière d'un anneau la transmission (6) avec son côté intérieur (11a), et d'une paroi frontale (12) réalisée d'une seule pièce avec l'enveloppe de boîtier (11) et qui est pourvue au centre d'une ouverture de transmission (17) pour l'arbre de sortie de transmission (18) de la transmission (6), dans laquelle un liquide de refroidissement est acheminé à travers le boîtier d'entraînement (4) pour le refroidissement des composants de la transmission (6), dans laquelle une chambre annulaire (33) est disposée à l'extérieur sur la paroi frontale (12) autour de l'ouverture de transmission (17), dans laquelle des canaux de liquide de refroidissement (35) sont réalisés dans le boîtier d'entraînement (4), lesquels mènent à la chambre annulaire (33) en partant du côté intérieur (11a) de l'enveloppe de boîtier (11), **caractérisée par** un boîtier d'essieu (15) entourant l'arbre de sortie de transmission (18), lequel boîtier d'essieu est pourvu d'une bride (16) tournée vers le boîtier d'entraînement (4), laquelle est fixée à la paroi frontale (12), et en ce qu'une zone annulaire de la bride (16) forme la chambre annulaire (33) conjointement avec le côté frontal (12).

2. Unité d'entraînement électrique selon la revendication 1,
**caractérisée en ce que** la chambre annulaire (33) est partiellement formée par une gouttière dans le côté extérieur de la paroi frontale (12).

3. Unité d'entraînement électrique selon la revendication 1 ou 2,
**caractérisée en ce que** le boîtier d'essieu (15) est pourvu, au niveau de son extrémité opposée à la bride (16), d'une fusée d'essieu (1) permettant de supporter une roue de véhicule (2).

4. Unité d'entraînement électrique selon l'une des revendications précédentes, **caractérisée en ce qu'un** embout de raccordement de liquide de refroidissement est disposé sur la bride (16), et **en ce qu'**un canal de liquide de refroidissement mène de l'embout de raccordement de liquide de refroidissement à la chambre annulaire (33).

5. Unité d'entraînement électrique selon l'une des revendications précédentes, **caractérisée par** un premier et un second joint d'étanchéité entre la bride et la paroi d'extrémité (12), dans laquelle le premier joint d'étanchéité est un joint d'étanchéité annulaire (51) disposé entre la chambre annulaire (33) et l'ouverture de transmission (17), et le second joint d'étanchéité est un joint d'étanchéité annulaire (52) disposé autour de la chambre annulaire (33).

6. Unité d'entraînement électrique selon la revendication 5,
**caractérisée en ce que** les joints d'étanchéité annulaires (51, 52) sont placés dans la paroi frontale (12) dans des rainures annulaires ouvertes vers le côté extérieur de la paroi frontale (12).

7. Unité d'entraînement électrique selon la revendication 5 ou 6,
**caractérisée en ce que** les deux joints d'étanchéité (51, 52) sont disposés de manière décalée axialement l'un par rapport à l'autre dans la direction longitudinale de l'arbre de sortie de transmission (18), dans laquelle le second joint d'étanchéité (52) est le joint d'étanchéité le plus proche du côté entraînement.

8. Unité d'entraînement électrique selon l'une des revendications précédentes,
**caractérisée en ce que** d'autres canaux de liquide de refroidissement (41) sont réalisés dans le boîtier d'entraînement (4), **et en ce que** les autres canaux de liquide de refroidissement (41) mènent de la chambre annulaire (33) au côté intérieur (12a) de celle-ci en passant par la paroi frontale (12).

9. Unité d'entraînement électrique selon la revendication 8,
**caractérisée en ce que** les autres canaux de liquide de refroidissement (41) sont des alésages disposés, par rapport à l'axe central (A), sur un diamètre inférieur au diamètre sur lequel sont disposés les canaux de liquide de refroidissement (35).

10. Unité d'entraînement électrique selon la revendication 8 ou 9,
**caractérisée en ce que** les axes des autres canaux de liquide de refroidissement (41) sont orientés parallèlement à l'axe central (A).

11. Unité d'entraînement électrique selon l'une des revendications 8 à 10, **caractérisée en ce que** les autres canaux de liquide de refroidissement (41) débouchent sur le fond (42), et **en ce que** les canaux de liquide de refroidissement (35) débouchent dans la paroi latérale (43) de la chambre annulaire (33) réalisée comme une gouttière.

12. Unité d'entraînement électrique selon l'une des revendications précédentes, **caractérisée en ce que** la bride (16) du boîtier d'essieu (15) est fixée à la paroi frontale (12) au moyen d'une pluralité de vis (19) disposées sur un cercle primitif commun.

13. Unité d'entraînement électrique selon la revendication 12,
**caractérisée en ce que** le diamètre du cercle primitif est supérieur au plus grand diamètre de la chambre annulaire (33), et est de préférence supérieur au diamètre du second joint d'étanchéité (52).

14. Unité d'entraînement électrique selon la revendication 12 ou 13,
**caractérisée en ce que** les vis (19) viennent en prise avec leur filetage dans des trous borgnes filetés (20) réalisés dans la paroi frontale (12).

15. Unité d'entraînement électrique selon la revendication 14,
**caractérisée en ce que** les canaux de liquide de refroidissement (35) mènent à la chambre annulaire (33) sur des sections circonférentielles sur lesquelles aucun trou borgne fileté (20) n'est réalisé dans la paroi frontale (12).

16. Unité d'entraînement électrique selon l'une des revendications 12 à 15,
**caractérisée en ce que** la paroi frontale (12) et la bride (16) sont alignées axialement l'une par rapport à l'autre par des surfaces de centrage (55) réalisées sur celles-ci et sont en contact mutuel.

17. Unité d'entraînement électrique selon la revendication 16,
**caractérisée en ce que** les surfaces de centrage (55) sont disposées sur un diamètre inférieur au plus petit diamètre de la chambre annulaire (33).
